# EUROPEAN PATENT APPLICATION

(11) **EP 4 310 337 A1**
(43) Date of publication of application: **24.01.2024**
(21) Application number: 22771166.0
(22) Date of filing: 07.03.2022
(51) Int. Cl.: F04D 13/06, F16J 15/34, F04D 29/04, F04D 29/12

(54) **AXIAL SEALING DEVICE**

(30) Priority: 15.03.2021 JP 2021041884; 13.07.2021 JP 2021115872
(71) Applicant: Eagle Industry Co., Ltd., Minato-ku Tokyo 105-8587 (JP)
(72) Inventor: NEGISHI, Yuta, Tokyo 105-8587 (JP); UCHIYAMA, Ryosuke, Tokyo 105-8587 (JP); YAMAGUCHI, Gai, Tokyo 105-8587 (JP); MAETANI, Yuki, Tokyo 105-8587 (JP); TSUKAMOTO, Takahiro, Tokyo 105-8587 (JP); MATSUMOTO, Osamu, Tokyo 105-8587 (JP); MIYAZAKI, Sayaka, Tokyo 105-8587 (JP); INOUE, Hiroki, Tokyo 105-8587 (JP); ONUMA, Minori, Tokyo 105-8587 (JP); MAKISHIMA, So, Tokyo 105-8587 (JP)
(74) Representative: WSL Patentanwälte Partnerschaft mbB
(86) International application number: PCT/JP2022/009707
(87) International publication number: WO 2022/196412

(57) **Abstract**

A shaft sealing device capable of maintaining high lubricity between sliding surfaces is provided. Communication paths 10k and 13 communicating with an external space are connected to a drive space A and a fluid in the drive space A introduced between a pair of sliding surfaces 31s and 32s by a fluid introduction mechanism 40 is replenished from an external space through the communication paths 10k and 13.

## Description

### {TECHNICAL FIELD}

The present invention relates to a shaft sealing device which seals a gap between a casing and a rotating shaft of a rotating machine.

### {BACKGROUND ART}

As a shaft sealing device which prevents a leakage of a sealed fluid around a rotating shaft in a rotating machine, for example, a shaft sealing device using a mechanical seal composed of a pair of annular sliding components rotating relative to each other and having a pair of sliding surfaces sliding on each other is known.

For example, as shown in Patent Citation 1, a shaft sealing device used in a submersible pump is exemplified. The shaft sealing device of Patent Citation 1 includes a casing which has a closed drive space for disposing a motor therein, a rotating shaft which penetrates the casing and is disposed in a space from a drive space on a leakage side to an underwater space on a sealed fluid side, and a mechanical seal which is disposed between the rotating shaft and the casing. When the motor rotationally drives the rotating shaft, a pump impeller provided at one end of the rotating shaft is rotationally driven to cause the water in the underwater space to flow and a pair of sliding components constituting the mechanical seal slides on each other in a relative rotation state. Accordingly, it is possible to prevent water from entering the drive space from the underwater space.

In the shaft sealing device using the mechanical seal as in Patent Citation 1, since the water in the underwater space flows between the sliding surfaces of the pair of sliding components to form a liquid film, the lubricity between the sliding surface can be increased during the relative rotational sliding. However, lubricating performance depends on liquid type and stable lubricity is not easily exhibited.

Here, the above-described shaft sealing device may adopt a technique in which a fluid introduction mechanism such as a spiral groove introducing a fluid in a drive space between a pair of sliding surfaces is provided and the fluid introduction mechanism moves the fluid in the drive space toward a sealed fluid side space to be introduced between the sliding surfaces so that a fluid film is formed between the sliding surfaces to ensure lubricity and to suppress the leakage of a sealed fluid into the drive space.

### {CITATION LIST}

### {Patent Literature}

Patent Citation 1: JP 2016-186297 A (Page 4, FIG. 1)

### {SUMMARY OF INVENTION}

### {Technical Problem}

When the above-described fluid introduction mechanism is provided between the sliding surfaces of the shaft sealing device as in Patent Citation 1, the leakage of the sealed fluid into the drive space can be suppressed, but since the drive space is a closed space, the fluid in the drive space decreases in accordance with the relative rotational sliding between the sliding surfaces. Accordingly, since the fluid cannot be introduced between the sliding surfaces, there is a risk that high lubricity between the sliding surfaces cannot be maintained.

The present invention has been made in view of such problems and an object of the present invention is to provide a shaft sealing device capable of maintaining high lubricity between sliding surfaces.

### {Solution to Problem}

In order to solve the foregoing problem, a shaft sealing device according to the present invention includes: a casing which has a drive space accommodating a drive unit; a rotating shaft which penetrates the casing and is disposed to extend from the drive space to a sealed fluid side space; and a seal component which is disposed between the casing and the rotating shaft, has a pair of sliding surfaces sliding relatively with each other in a facing state, and has a fluid introduction mechanism formed on at least one of the pair of sliding surfaces so that a fluid in the drive space is introduced between the pair of sliding surfaces, wherein a communication path which communicates with an external space is connected to the drive space. According to the foregoing feature of the present invention, since the fluid is replenished from the external space into the drive space through the communication path when the fluid in the drive space is introduced between the pair of sliding surfaces by the fluid introduction mechanism, it is possible to prevent the fluid in the drive space from decreasing in accordance with the relative rotational sliding between the sliding surfaces and to maintain high lubricity between the sliding surfaces.

It may be preferable that a flow blocking portion is provided in the casing, the drive space is partitioned into a seal component side space and a drive unit side space by the flow blocking portion, and the communication path is connected to the seal component side space. According to this preferable configuration, since the fluid is replenished from the external space to the seal component side space through the communication path, it is possible to replenish the fluid from the external space into the drive space without using the flow blocking portion. Further, since the fluid is smoothly supplied to the fluid introduction mechanism, the introduction of the fluid by the fluid introduction mechanism is not disturbed. Further, it is possible to decrease a pressure difference between the seal component side space and the sealed fluid side space. Further, since the seal component is cooled by the fluid, it is possible to maintain good sealing performance.

It may be preferable that the flow blocking portion is a bearing. According to this preferable configuration, since the communication path is connected to the seal component side in relation to the bearing, it is possible to smoothly supply the fluid to the fluid introduction mechanism.

It may be preferable that the seal component is a mechanical seal having a pair of sliding parts rotating relatively with each other. According to this preferable configuration, it is easy to control the amount of the fluid in the drive space introduced between the sliding surfaces on the basis of the relative rotation of the pair of sliding parts.

It may be preferable that the shaft sealing device is used in a device immersed in water, and the communication path is partially defined by a tube which is connected to a communication hole provided in the casing and extends to the external space. According to this preferable configuration, it is possible to replenish the fluid from the external space into the drive space through the internal space of the communication hole and the tube even when the submersible pump is immersed under water.

It may be preferable that a fluid in the drive space is a gas and a fluid in the sealed fluid side space is a liquid, the casing is provided with a through hole through which the rotating shaft is inserted and a liquid reservoir groove which is formed on an outer radial side in relation to the through hole, and the communication path communicates with the drive space at a position above the liquid reservoir groove. According to this preferable configuration, since the liquid is stored in the liquid reservoir groove even when the liquid leaks from the sealed fluid side space into the drive space, it is possible to maintain a state in which the drive space and the external space communicate with each other by the communication path disposed above the liquid reservoir groove.

### {BRIEF DESCRIPTION OF DRAWINGS}

FIG. 1 is a partially cross-sectional view showing a shaft sealing device according to an embodiment of the present invention.
FIG. 2 is an enlarged cross-sectional view of a main part of the shaft sealing device in the embodiment.
FIG. 3 is a schematic view in which a sliding surface of a stationary seal ring is viewed from an axial direction in the embodiment.
FIG. 4A is a schematic view of the movement of a fluid in a dynamic pressure generation groove during a relative rotation between a rotating seal ring and a stationary seal ring in the embodiment and FIG. 4B is the same schematic cross-sectional view in the embodiment.

### {DESCRIPTION OF EMBODIMENTS}

A mode for carrying out a shaft sealing device according to the present invention will be described on the basis of an embodiment.

### {Embodiment}

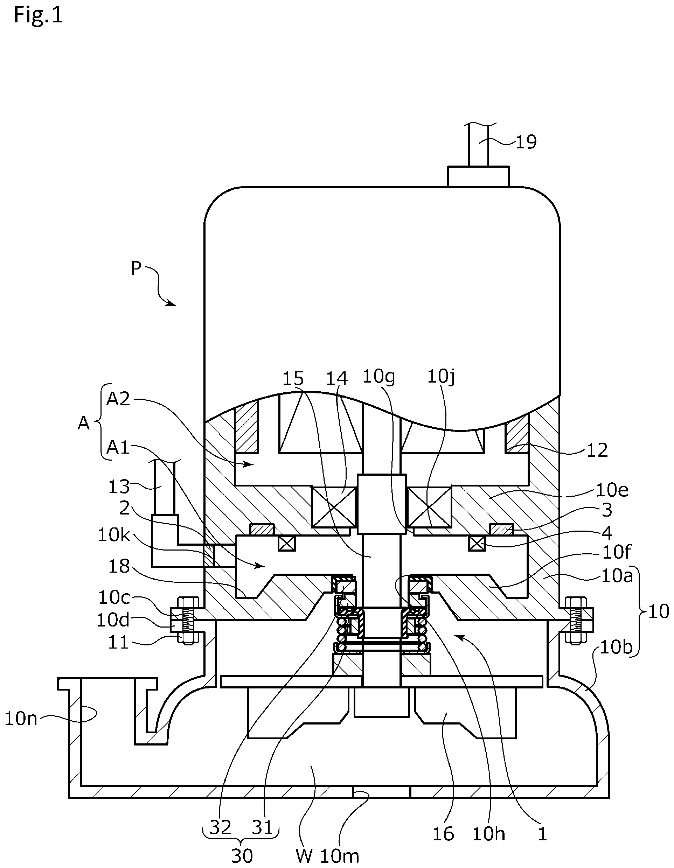

A shaft sealing device according to an embodiment of the present invention will be described with reference to FIGS. 1 to 4. The shaft sealing device of the embodiment is applied to a submersible pump that is used with a pump body submerged, but may be applied to other rotating machines. For convenience of description, dots may be added to grooves formed on a sliding surface in the drawings.

As shown in FIG. 1, a shaft sealing device 1 is installed to seal a gap between a liquid inflow space W which is a sealed fluid side space for disposing an impeller 16 provided at a lower end of a rotating shaft 15 of a motor 12 serving as a drive unit and a motor side drive space A (hereinafter, simply referred to as a drive space A) which is a leakage side space.

The shaft sealing device 1 mainly includes a first housing member 10a that constitutes a casing of the motor 12, the rotating shaft 15 which penetrates the first housing member 10a, and a mechanical seal 30 which is a seal component disposed between the first housing member 10a and the rotating shaft 15.

A housing 10 of a submersible pump P includes a first housing member 10a that partitions the drive space A and a second housing member 10b that partitions the liquid inflow space W. The first housing member 10a and the second housing member 10b are hermetically connected by fastening flanges 10c and 10d with bolts and nuts 11.

The drive space A of the first housing member 10a is a closed space and includes a lower space A1 which is a seal component side space disposed on the side of the mechanical seal 30 and an upper space A2 which is a drive unit side space disposed on the side of the motor 12. The motor 12 is fixed and installed at the upper space A2 of the first housing member 10a. The motor 12 is controlled based on power, control signals, and the like input from the outside via a cable 19.

The first housing member 10a includes a first partition wall portion 10e which partitions the lower space A1 and the upper space A2 and extends in the horizontal direction and a second partition wall portion 10f which partitions the lower space A1 and the liquid inflow space W disposed below the lower space A1 and extends in the horizontal direction.

The first partition wall portion 10e and the second partition wall portion 10f are respectively provided with through holes 10g and 10h through which the rotating shaft 15 extending in the up and down direction is insertable.

The through hole 10g of the first partition wall portion 10e is formed such that the upper portion is a large diameter hole portion and the lower portion is a small diameter hole portion and a step portion 10j is formed on the inner radial side of the first partition wall portion 10e by the large diameter hole portion and the small diameter hole portion. A bearing 14 serving as a flow blocking portion rotatably holding the rotating shaft 15 is fixed to the step portion 10j. In addition, the flow blocking portion may be one other than the bearing 14. For example, a single seal device such as an oil seal or a lip seal may be provided or both the seal device and the bearing may be provided side by side in the axial direction.

The bearing 14 of the embodiment is a roller bearing and the lower space A1 and the upper space A2 communicate with each other through a slight gap between the members constituting the bearing 14. That is, the lower space A1 and the upper space A2 are partitioned in a state in which the flow path is narrowed by the bearing 14, that is, the flow blocking portion so that the fluid does not move easily.

An annular liquid reservoir groove 18 is formed at a position spaced radially outward from the through hole 10h in the second partition wall portion 10f. A surface on the inner radial side of the liquid reservoir groove 18 is a tapered surface which increases in diameter from the upper surface of the second partition wall portion 10f downward and toward the outer radial side. Accordingly, even if the liquid of the liquid inflow space W enters the lower space A1, the liquid can be guided to the outer radial side. In addition, the liquid reservoir groove 18 is not limited to an annular shape and a plurality of the liquid reservoir grooves may be provided to be spaced apart in the circumferential direction.

Further, a communication hole 10k which communicates with the lower space A1 is formed through the lower side wall of the first housing member 10a and one end of a tube 13 is connected to the communication hole 10k. The other end of the tube 13 extends to an external space (hereinafter, also referred to as an atmospheric space). That is, the communication hole 10k and the tube 13 constitute a communication path that communicates the lower space A1 and the atmospheric space and the drive space A is filled with air. In addition, the external space is a space separated from the underwater space in which the submersible pump P is immersed.

Further, the communication hole 10k is disposed above the upper surface of the second partition wall portion 10f, that is, above the liquid reservoir groove 18.

Further, a filter 2 is provided in the communication hole 10k and can prevent foreign matter from entering the lower space A1.

Further, an inner wall of the lower space A1, more specifically, an upper inner wall is provided with a moisture absorbent material 3 that absorbs moisture in the lower space A1. In addition, the moisture absorbent material 3 may be any material as long as the material absorbs moisture in the air, such as potassium chloride, silicon dioxide, and quicklime.

Further, a variable temperature mechanism 4 that can change the temperature in the lower space A1 is provided in the lower space A1. The variable temperature mechanism 4 can condense ambient moisture by heating or cooling. Condensed moisture is removed by the moisture absorbent material 3.

The second housing member 10b forms the liquid inflow space W therein and constitutes a casing accommodating the impeller 16 installed at the lower end of the rotating shaft 15. The second housing member 10b is provided with a suction port 10m which communicates with an underwater space in which the submersible pump P is disposed and a discharge port 10n which is connected to a pipe (not shown). The impeller 16 is rotationally driven to impart a moving force to the liquid (that is, water) in the liquid inflow space W from the suction port 10m to the discharge port 10n and hence functions as a pump.

The mechanical seal 30 is provided between the rotating shaft 15 and the through hole 10h of the first housing member 10a. The mechanical seal 30 seals a gap between the liquid inflow space W and the drive space A along the rotating shaft 15. In other words, the mechanical seal 30 seals a gap between the outer peripheral surface of the rotating shaft 15 and the inner peripheral surface of the through hole 10h of the first housing member 10a.

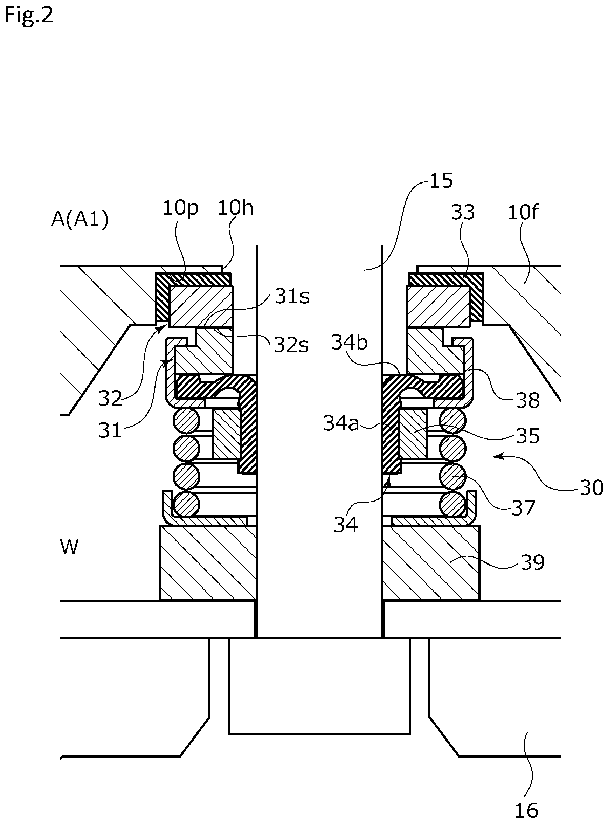

Referring to FIG. 2, the mechanical seal 30 mainly includes a rotating seal ring 31 which is a sliding part having a rotating side sliding surface 31s and a stationary seal ring 32 which is a sliding part having a stationary side sliding surface 32s sliding on the rotating side sliding surface 31s.

Specifically, the mechanical seal 30 includes the rotating seal ring 31, the stationary seal ring 32, a cup gasket 33, a bellows 34, a tightening ring 35, a spring 37, a mounting bracket 38, and a collar 39.

The rotating seal ring 31 and the stationary seal ring 32 are typically formed of a combination of SiC (as an example of hard material) or SiC and carbon (as an example of soft material), but the present invention is not limited thereto. Any sliding material can be applied insofar as it is used as a sliding material for a mechanical seal. In addition, the SiC includes a sintered body using boron, aluminum, carbon, or the like as a sintering aid and a material made of two or more types of phases having different components and compositions, examples of which include SiC in which graphite particles are dispersed, reaction-sintered SiC made of SiC and Si, SiC-TiC, and SiC-TiN. As the carbon, resin-molded carbon, sintered carbon, and the like can be used, including carbon in which carbon and graphite are mixed. In addition to the above sliding materials, a metal material, a resin material, a surface modification material (e.g., coating material), a composite material, and the like can also be applied.

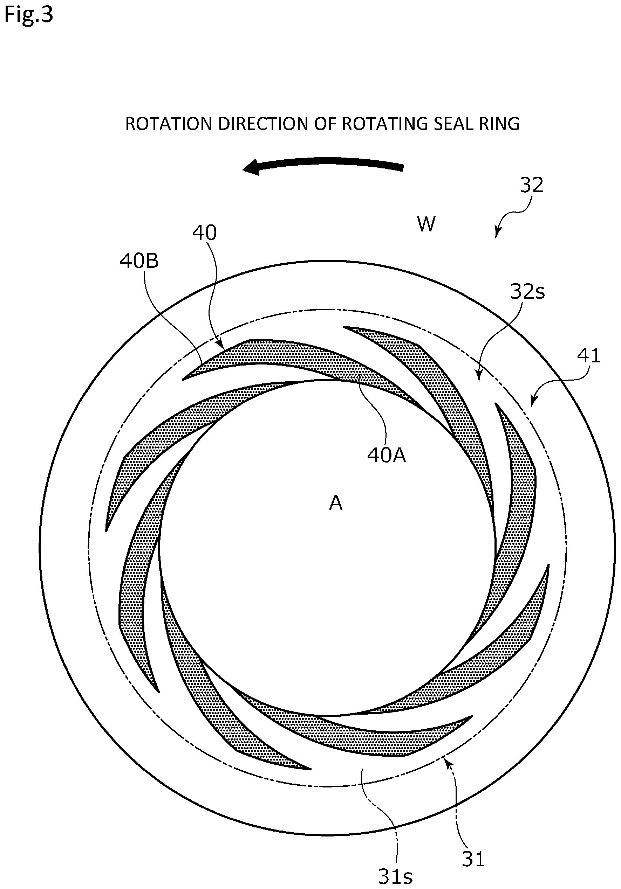

The rotating side sliding surface 31s of the rotating seal ring 31 is formed to have a smaller radial width than the stationary side sliding surface 32s of the stationary seal ring 32 and a plurality of dynamic pressure generation grooves 40 are formed on the stationary side sliding surface 32s of the stationary seal ring 32 as a fluid introduction mechanism to be described later (see FIG. 3). In addition, a detailed structure of the dynamic pressure generation groove 40 will be described later.

The bellows 34 is made of an elastically deformable material such as rubber. The bellows 34 includes a cylindrical portion 34a which is tightly attached to the outer peripheral surface of the rotating shaft 15 in a sealed state and an annular portion 34b which is bent radially outward from the end portion of the cylindrical portion 34a on the side of the drive space A. The tightening ring 35 is disposed on the outer peripheral surface of the cylindrical portion 34a and the cylindrical portion 34a is tightened to the outer peripheral surface of the rotating shaft 15 by the tightening ring 35.

Further, the annular portion 34b is hermetically fixed to the outer peripheral portion of the annular portion 34b and the outer peripheral portion of the rotating seal ring 31 by caulking with the mounting bracket 38.

The spring 37 is disposed on the outer peripheral side of the bellows 34. The upper end of the spring 37 comes into contact with the lower surface of the mounting bracket 38, the lower end of the spring 37 comes into contact with a spring receiving member, and the collar 39 disposed below the spring receiving member and fixed to the rotating shaft 15 receives a reaction force. Due to the spring force of the spring 37, the rotating seal ring 31 is biased toward the stationary seal ring 32 through the mounting bracket 38.

The cup gasket 33 is made of a highly elastic rubber material, synthetic resin, or the like. The through hole 10h of the first housing member 10a has a small diameter hole portion at the upper portion and a large diameter hole portion at the lower portion and a step portion 10p is formed on the inner radial side of the second partition wall portion 10f and is held in a compressed state between the step portion 10p of the second partition wall portion 10f and the rotating seal ring 31. That is, the cup gasket 33 seals a gap between the second partition wall portion 10f and the rotating seal ring 31.

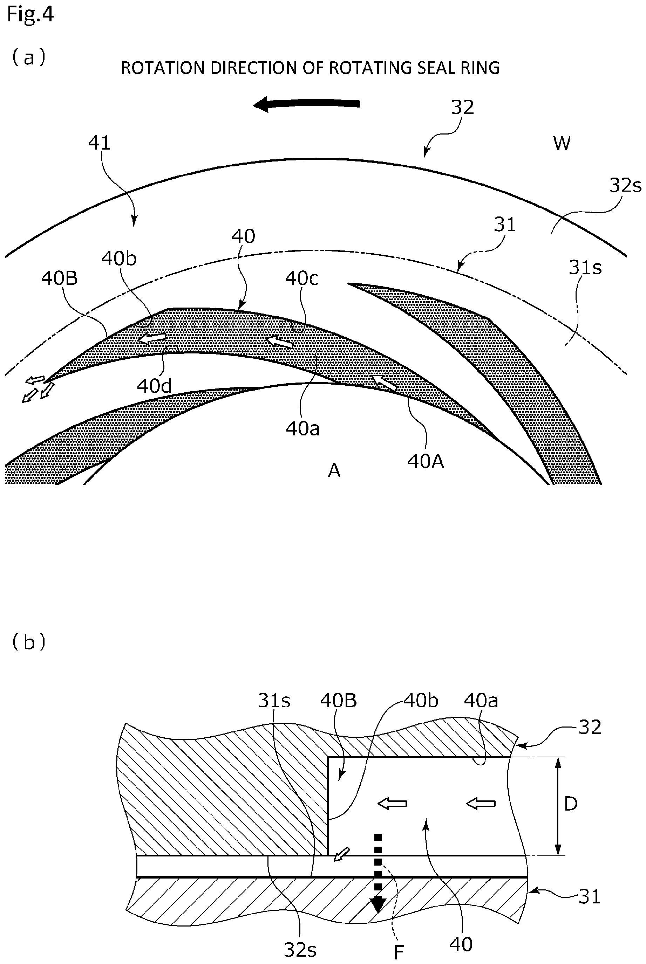

Next, the structure of the rotating side sliding surface 31s of the rotating seal ring 31 and the stationary side sliding surface 32s of the stationary seal ring 32 will be described on the basis of FIGS. 3 and 4. Hereinafter, the rotating side sliding surface 31s and the stationary side sliding surface 32s are simply referred to as the sliding surfaces 31s and 32s.

As shown in FIGS. 3 and 4A, the rotating seal ring 31 slides counterclockwise relative to the stationary seal ring 32 as indicated by the arrow. A plurality of (eight in the embodiment) dynamic pressure generation grooves 40 are equally arranged in the circumferential direction on the inner radial side of the sliding surface 32s of the stationary seal ring 32.

In addition, the sliding surface 31s of the rotating seal ring 31 has a size larger than the dynamic pressure generation groove 40 in the radial direction and has a width smaller than the sliding surface 32s in the radial direction. Further, the number of the dynamic pressure generation grooves 40 can be freely changed. Further, the sliding surface 31s is formed in a flat surface.

Further, a portion of the sliding surface 32s other than the dynamic pressure generation groove 40 is a land 41 forming a flat surface. Specifically, the land 41 includes a portion between the dynamic pressure generation grooves 40 which are adjacent to each other in the circumferential direction and an annular portion which is disposed on the outer radial side of each dynamic pressure generation groove 40 and these portions are arranged on the same plane as the surface of the land 41 on the side of the sliding surface 32s (hereinafter, also referred to as the flat surface of the land 41).

In the dynamic pressure generation groove 40, the inner radial end portion, that is, a relative rotation start end 40A communicates with the drive space A and extends in an arc shape from the start end 40A toward the outer radial side while being inclined toward the rotation terminal end side of the rotating seal ring 31 and the outer radial end portion, that is, a relative rotation terminal end 40B is closed by a wall portion 40b not to communicate with the liquid inflow space W. This dynamic pressure generation groove 40 has an arc shape that protrudes toward the outer radial side.

Specifically, the dynamic pressure generation groove 40 includes a bottom surface 40a which is flat from the start end 40A to the terminal end 40B and is parallel to the flat surface of the land 41, the wall portion 40b which extends perpendicularly from the end edge of the terminal end 40B of the bottom surface 40a toward the sliding surface 32s, and side wall portions 40c and 40d which extend perpendicularly from both side edges of the bottom surface 40a toward the sliding surface 32s.

In addition, an angle formed between the wall portion 40b and the side wall portion 40c is an obtuse angle, an angle formed between the wall portion 40b and the side wall portion 40d is an acute angle, and the acute angle portion of the wall portion 40b on the side of the side wall portion 40d is located on the rotation terminal end side of the rotating seal ring 31 in relation to the obtuse angle portion of the wall portion 40b on the side of the side wall portion 40c.

These dynamic pressure generation grooves 40 are arranged so that the adjacent dynamic pressure generation grooves 40 overlap each other in the radial direction when viewed from the axial direction.

Further, as shown in FIG. 4B, the dynamic pressure generation groove 40 has a constant depth D from the start end 40A (see FIGS. 3 and 4A) to the terminal end 40B. In addition, FIG. 4B is a schematic cross-sectional view assuming a state in which one dynamic pressure generation groove 40 is cut in the longitudinal direction.

Further, in this embodiment, an example in which the dynamic pressure generation groove 40 is formed to have a constant depth D has been described, but the present invention is not limited thereto. For example, the dynamic pressure generation groove may be inclined to be shallower from the start end toward the terminal end or a plurality of steps may be formed to be shallower from the start end toward the terminal end. Further, the bottom portion of the dynamic pressure generation groove is not limited to a planar shape, and may have a curved shape. That is, a pressure may be generated in the sliding surface by introducing a fluid into the sliding surface by the rotation of the seal ring.

Next, an operation during the relative rotation between the stationary seal ring 32 and the rotating seal ring 31 will be described with reference to FIG. 4. First, air in the drive space A flows into the dynamic pressure generation groove 40 in a non-operation state of the submersible pump P in which the rotating seal ring 31 does not rotate. In addition, since the rotating seal ring 31 is biased toward the stationary seal ring 32 by the spring 37 and the pressure of the liquid in the liquid inflow space W, the sliding surfaces 31s and 32s are in contact with each other and almost no liquid (hereinafter, referred to as a sealed fluid) in the liquid inflow space W enters between the sliding surfaces 31s and 32s.

When the rotating seal ring 31 rotates relative to the stationary seal ring 32, air in the dynamic pressure generation groove 40 move along the rotation direction of the rotating seal ring 31 due to the friction with the sliding surface 31s and air in the drive space A is drawn to the dynamic pressure generation groove 40 as indicated by the white arrow in FIG. 4. That is, air in the drive space A moves from the start end 40A toward the terminal end 40B in the dynamic pressure generation groove 40.

The air having moved toward the terminal end 40B can increase the pressure at and near the acute angle portion of the terminal end 40B of the dynamic pressure generation groove 40. That is, a positive pressure is generated at and near the acute angle portion.

The sliding surfaces 31s and 32s are slightly separated from each other by the force F caused by the positive pressure generated at and near the acute angle portion. Accordingly, air in the dynamic pressure generation groove 40 mainly enters between the sliding surfaces 31s and 32s. In this way, since air is interposed between the sliding surfaces 31s and 32s, lubricity is improved (so-called gas lubrication), and wear between the sliding surfaces 31s and 32s can be suppressed. In addition, the air having flowed between the sliding surfaces 31s and 32s may slightly leak toward the liquid inflow space W.

Further, at this time, the sealed fluid flows to and near the acute angle portion of the dynamic pressure generation groove 40 since the sliding surfaces 31s and 32s are slightly separated from each other, but since a positive pressure is generated at and near the acute angle portion of the dynamic pressure generation groove 40, the sealed fluid which is a liquid on the side of the liquid inflow space W almost does not enter the acute angle portion and the inner radial side of the vicinity thereof, that is, the side of the drive space A.

Returning to FIG. 1, the air in the drive space A is drawn toward the dynamic pressure generation groove 40 during the relative rotation between the rotating seal ring 31 and the stationary seal ring 32, but the amount of air drawn into the dynamic pressure generation groove 40 is replenished from the atmospheric space through the communication hole 10k and the tube 13 communicating with the lower space A1 of the drive space A.

In this way, since air is replenished from the external atmospheric space into the drive space A through the communication hole 10k and the tube 13 when air in the drive space A is introduced between the sliding surfaces 31s and 32s by the dynamic pressure generation groove 40 during the relative rotation between the rotating seal ring 31 and the stationary seal ring 32, it is possible to prevent the air in the drive space A from being extremely reduced due to the relative rotational sliding between the sliding surfaces 31s and 32s and to prevent insufficient lubrication between the sliding surfaces 31s and 32s due to insufficient air. As a result, it is possible to maintain high lubricity. Further, since the air in the drive space A moves toward the liquid inflow space W, the sealed fluid of the liquid inflow space W does not easily leak into the drive space A.

Further, it is possible to prevent the gas in the drive space A from decreasing so that the atmospheric pressure in the driving space A decreases, that is, the atmospheric pressure approaches a vacuum state.

Further, the fluid in the drive space A is air and air can be circulated from the atmospheric space into the drive space A. Accordingly, there is no need to provide a pump or the like in the external space or the communication path in order to replenish the air from the atmospheric space into the drive space A and the structure can be made simple.

Further, since the fluid in the drive space A is at atmospheric pressure, it is possible to prevent a force caused by the fluid pressure in the drive space A from affecting the sliding pressure between the sliding surfaces 31s and 32s.

Further, the drive space A is partitioned into the lower space A1 on the side of the mechanical seal 30 and the upper space A2 on the side of the motor 12 by the bearing 14 guiding the rotation of the rotating shaft 15 and the communication hole 10k communicates with the lower space A1.

Accordingly, since it is possible to suppress a decrease in pressure in the lower space A1 by replenishing air from the atmospheric space to the lower space A1 through the communication hole 10k and the tube 13, it is possible to decrease a pressure difference between the lower space A1 and the upper space A2 and to suppress air from moving between the lower space A1 and the upper space A2. Thus, it is possible to suppress dust in the upper space A2 or lubricant of the bearing 14 from entering the lower space A1 and affecting the mechanical seal 30 as air moves between the lower space A1 and the upper space A2.

Further, since the seal component is the mechanical seal 30 which includes the rotating seal ring 31 and the stationary seal ring 32, the fluid introduction mechanism which introduces air in the drive space A between the sliding surfaces is the dynamic pressure generation groove 40 provided on the sliding surface 32s of the stationary seal ring 32, and the rotating shaft 15 or the housing 10 is not used as the sliding surface, it is easy to control the amount of the air in the drive space A introduced between the sliding surfaces 31s and 32s on the basis of the relative rotation speed between the rotating seal ring 31 and the stationary seal ring 32.

Further, the shaft sealing device 1 is used for the submersible pump P and the tube 13 extends from the communication hole 10k to the atmospheric space. Accordingly, it is possible to replenish air from the atmospheric space into the drive space A through the internal space of the communication hole 10k and the tube 13 even when the submersible pump P is immersed under water. In addition, the tube 13 may be a flexible tube made of resin or the like which is flexible enough to bend and deform or may be a metal tube which does not have flexibility.

Further, the drive space A is disposed vertically above the liquid inflow space W, the first housing member 10a is provided with the through hole 10h through which the rotating shaft 15 is inserted in the up and down direction and the liquid reservoir groove 18 which is disposed on the outer radial side of the through hole 10h, and the communication hole 10k communicates with the lower space A1 of the drive space A at a position above the liquid reservoir groove 18. Accordingly, since the sealed fluid is stored in the liquid reservoir groove 18 even when the sealed fluid leaks from the liquid inflow space W into the lower space A1, the communication hole 10k disposed above the liquid reservoir groove 18 is not blocked by the sealed fluid and the lower space A1 and the atmospheric space can be maintained in a communication state.

In addition, in the embodiment, an example in which the second partition wall portion 10f partitioning the lower space A1 and the liquid inflow space W is provided in the first housing member 10a has been described, but the present invention is not limited thereto. For example, the second partition wall portion may be provided in the second housing member 10b and the lower space A1 and the liquid inflow space W may be partitioned by a member different from the first housing member 10a and the second housing member 10b.

Although the embodiment of the present invention has been described above with reference to the drawings, a detailed configuration is not limited to these embodiments and modifications or additions in the scope not departing from the spirit of the present invention are also included in the present invention.

For example, in the above-described embodiment, an example in which the motor is the drive unit has been described, but the present invention is not limited thereto. For example, any drive device may be used.

Further, in the above-described embodiment, the filter 2 is provided in the communication hole 10k, but the present invention is not limited thereto. For example, a filter may be provided in the tube 13. Further, the present invention is not limited to the filter and any device such as a cyclone separator that prevents foreign matter from entering the lower space A1 may be used.

Further, in the above-described embodiment, the moisture absorbent material is provided in the inner wall of the lower space A1, but the present invention is not limited thereto. For example, the moisture absorbent material may be provided at the same position as the filter and the moisture absorbent material may be provided instead of the filter if the entry of foreign matter can be prevented by the moisture absorbent material.

Further, in the above-described embodiment, an example in which the communication path communicating the drive space A and the external space is constituted by the communication hole 10k and the tube 13 has been described, but the present invention is not limited thereto. For example, the communication path may be constituted only by the communication hole 10k. In this case, the communication hole 10k may not communicate with the sealed fluid side space, but may directly communicate with the external space.

Further, in the above-described embodiment, the tube 13 and the cable 19 are provided separately, but the present invention is not limited thereto. For example, the tube and the cable may be integrally formed by passing the cable through the tube. For example, the cable passing path and the communication path communicating the drive space and the external space with each other may be provided separately in the tube. Further, the drive space and the external space may communicate with each other by the communication path provided in the cable.

Further, in the above-described embodiment, an example in which the fluid in the drive space A is an atmospheric pressure has been described, but the fluid in the external space may be pressurized by a pump or a fan to be forcedly sent into the drive space A.

Further, in the above-described embodiment, an example in which the drive space A and the external space communicate with each other has been described, but the present invention is not limited thereto. For example, the drive space A may communicate with a tank containing a sufficient amount of fluid instead of the external space.

Further, in the above-described embodiment, an example of the inside mechanical seal 30 which seals the sealed fluid that is about to leak from the outer radial side toward the inner radial side of the sliding surface has been described, but the present invention is not limited thereto. For example, an outside mechanical seal which seals a sealed fluid that is about to leak from an inner radial side toward an outer radial side of a sliding surface may be used. In this case, the rotating seal ring may be disposed on the side of the lower space A1 and the stationary seal ring may be disposed on the side of the liquid inflow space W.

Further, in the above-described embodiment, an example in which the dynamic pressure generation groove 40 is provided in the stationary seal ring 32 has been described, but the dynamic pressure generation groove may be provided in the rotating seal ring 31 or both the stationary seal ring 32 and the rotating seal ring 31.

Further, the dynamic pressure generation groove 40 of the above-described embodiment extends in an arc shape from the drive space A toward the liquid inflow space W, but the present invention is not limited thereto. For example, the dynamic pressure generation groove may extend in a linear shape from the drive space A toward the liquid inflow space W and may have a terminal end portion closed to generate a dynamic pressure. Further, the dynamic pressure generation groove may not have an acute angle portion or an obtuse angle portion and the corner portion of the dynamic pressure generation groove may have a curved shape when viewed from the axial direction.

Further, the start end 40A of the dynamic pressure generation groove 40 may not open to communicate with the drive space A and the dynamic pressure generation groove may be a dimple or the like surrounded by a land. In this case, the dimple may be disposed near the drive space A or the fluid pressure in the drive space A may be slightly higher than the fluid pressure in the liquid inflow space W.

Further, the fluid introduction mechanism is not limited to the dynamic pressure generation groove and may be one that hardly generates dynamic pressure and can simply introduce the fluid in the drive space A between the sliding surfaces.

Further, in the above-described embodiment, an example in which the fluid pressure in the drive space A is smaller than the fluid pressure in the liquid inflow space W has been described, but the fluid pressure in the drive space A may be the same as the fluid pressure in the liquid inflow space W or slightly higher than the fluid pressure in the liquid inflow space W.

Further, in the above-described embodiment, an example in which the drive space A is partitioned into the lower space A1 and the upper space A2 by the bearing 14 has been described, but the present invention is not limited thereto. For example, the bearing 14 may be provided outside the drive space A and the drive space A may be one space.

Further, in the above-described embodiment, an example in which the communication path communicates with the lower space A1 has been described, but the communication path may communicate with the upper space A2. In this case, a fluid moves from the lower space A1 to the upper space A2 through the bearing 14.

Further, in the above-described embodiment, an example in which the fluid in the drive space A is compressed air has been described, but the present invention is not limited thereto. For example, the fluid may be other gas, liquid, or a mist mixture of liquid and gas.

Further, in the above-described embodiment, an example in which the fluid in the sealed fluid side space is water has been described, but the present invention is not limited thereto. For example, the fluid may be other liquid, gas, or a mist mixture of liquid and gas.

Further, in the above-described embodiment, the shaft sealing device 1 used in the submersible pump P has been described, but the present invention is not limited thereto. For example, the shaft sealing device may be used in rotating machines such as automobiles and general industrial machines.

Further, in the above-described embodiment, an example in which the rotating shaft 15 is disposed to extend in the up and down direction has been described, but for example, the rotating shaft 15 may be disposed to extend in the right and left direction. In this case, the lower space A1 and the upper space A2 are arranged on the right and left sides.

### {REFERENCE SIGNS LIST}

- 1: Shaft sealing device
- 10: Housing
- 10a: First housing member (casing)
- 10g, 10h: Through hole
- 10k: Communication hole (communication path)
- 12: Motor (drive unit)
- 13: Tube (communication path)
- 14: Bearing
- 15: Rotating shaft
- 18: Liquid reservoir groove
- 30: Mechanical seal (seal component)
- 31: Rotating seal ring (sliding part)
- 31s: Rotating side sliding surface
- 32: Stationary seal ring (sliding part)
- 32s: Stationary side sliding surface
- 40: Dynamic pressure generation groove (fluid introduction mechanism)
- A: Motor side drive space
- A1: Lower space (seal component side space)
- A2: Upper space (drive unit side space)
- P: Submersible pump (device)
- W: Liquid inflow space (sealed fluid side space)

## Claims

1. A shaft sealing device, comprising:
a casing which has a drive space accommodating a drive unit;
a rotating shaft which penetrates the casing and is disposed to extend from the drive space to a sealed fluid side space; and
a seal component which is disposed between the casing and the rotating shaft, has a pair of sliding surfaces sliding relatively with each other in a facing state, and has a fluid introduction mechanism formed on at least one of the pair of sliding surfaces so that a fluid in the drive space is introduced between the pair of sliding surfaces,
wherein a communication path which communicates with an external space is connected to the drive space.

2. The shaft sealing device according to claim 1,
wherein a flow blocking portion is provided in the casing,
wherein the drive space is partitioned into a seal component side space and a drive unit side space by the flow blocking portion, and
wherein the communication path is connected to the seal component side space.

3. The shaft sealing device according to claim 2,
wherein the flow blocking portion is a bearing.

4. The shaft sealing device according to any one of claims 1 to 3,
wherein the seal component is a mechanical seal having a pair of sliding parts rotating relatively with each other.

5. The shaft sealing device according to any one of claims 1 to 4,
wherein the shaft sealing device is used in a device immersed in water, and
wherein the communication path is partially defined by a tube which is connected to a communication hole provided in the casing and extends to the external space.

6. The shaft sealing device according to any one of claims 1 to 5,
wherein a fluid in the drive space is a gas and a fluid in the sealed fluid side space is a liquid,
wherein the casing is provided with a through hole through which the rotating shaft is inserted and a liquid reservoir groove which is formed on an outer radial side in relation to the through hole, and
wherein the communication path communicates with the drive space at a position above the liquid reservoir groove.
